# EUROPEAN PATENT SPECIFICATION

(11) **EP 1 944 624 B1**
(45) Date of publication and mention of the grant of the patent: **29.05.2013**
(21) Application number: 08100242.0
(22) Date of filing: 09.01.2008
(51) Int. Cl.: G01T 1/167

(54) **Detector of unauthorized products in a protected access area**
Vorrichtung zur Erkennung nicht autorisierter Produkte in einem Bereich mit eingeschränktem Zugang
Détecteur de produits non autorisés dans une zone d'accès protégée

(30) Priority: 10.01.2007 FR 0752593
(43) Date of publication of application: 16.07.2008
(73) Proprietor: Manneschi, Alessandro, 52100 Arezzo (IT)
(72) Inventor: Manneschi, Alessandro, I-52100, AREZZO (IT)
(74) Representative: Regimbeau

(56) References cited:
- EP-A- 1 521 101
- EP-A- 1 752 794
- GB-A- 1 392 952
- JP-A- 5 119 156
- US-A- 4 253 025
- US-A- 4 591 720
- US-A1- 2006 284 094

## Description

The present invention relates to the field of detectors designed to detect unauthorized objects in a protected access area.

The present invention applies in particular to the detection of products emitting an ionizing or radioactive radiation.

These days, it appears necessary to check with a high degree of reliability the attempts to introduce or remove products emitting an ionizing or radioactive radiation into or out of a sensitive area.

The duly posed problem covers a very wide range of situations which encompass, in particular and in a nonlimiting way, the attempt to introduce products emitting a hazardous ionizing or radioactive radiation in a protected area, such as a store, a school, a station, a public or even private organization, or the attempt to remove products emitting an ionizing or radioactive radiation, for example in the case of theft in a company.

These days, it so happens that the individuals who attempt to fraudulently remove a product emitting an ionizing or radioactive radiation from a protected area or who attempt to introduce such a product, most commonly use the shoes and/or socks to hide the product concerned.

This trend seems to be due mainly to the fact that this area of the human body is difficult to check easily by eye or by feel.

A prior art device according to the preamble of claim 1 is known from EP 1 521 101.

Consequently, the object of the present invention is to propose new means with which to improve the reliability of detection of products emitting an ionizing or radioactive radiation in a protected access area.

This object is achieved within the framework of the present invention, thanks to a device according to claim 1.

Thus, and as will be specified below, the invention is distinguished from previous devices and/or previous uses, by the fact that the device is designed to apply the detection to a single foot (shoe) at a time, and therefore in succession to both feet (shoes).

The device also comprises means for detecting metals. The combination of the means for detecting ionizing or radioactive radiation with means for detecting metals makes it possible to prevent attempts to smuggle radioactive materials hidden inside lead boxes or in other concealing metals.

Preferred, but nonlimiting, aspects of the device of the present invention are as follows:
- the support base comprises a plate in the form of a step which comprises on its upper surface the positioning marking means,
- the height of the support base is between 100 and 200 mm, and very preferably of the order of 150 mm,
- the width of the support base is between 450 and 700 mm, and very preferably of the order of 575 mm,
- the depth of the support base is between 500 and 900 mm, and very preferably of the order of 670 mm,
- the positioning marking means comprise a drawing,
- the drawing comprises a frame, preferably rectangular,
- the frame has a length of between 300 and 500 mm, preferably of the order of 400 mm, and a width of between 110 and 250 mm, preferably of the order of 180 mm,
- the positioning marking means comprise a mechanical end-stop,
- the mechanical end-stop is adapted to serve as an end-stop for the heel of a shoe,
- the device comprises a means which delivers visual or audible messages guiding the user during the successive steps of the detection process,
- the device comprises random sorting means for randomly choosing individuals directed towards one or more additional tests.
   According to the invention
- the drawing comprises an imprint,
- the means of detecting ionizing or radioactive radiation comprise a tube containing a gas, the composition of which is chosen to generate an ionizing discharge on detection of an active radiation, the ionizing discharge making it possible to generate an electrical pulse,
- the tube is placed directly under the imprint drawing,
- the tube is positioned in a plane of symmetry of the imprint drawing,
- the tube extends roughly over the entire length of the imprint drawing,
- the means of detecting ionizing or radioactive radiation comprise means of detecting the electrical pulse generated by the tube. Preferably
- the means of detecting the electrical pulse are positioned under the base, in a peripheral region of the imprint,
- the means of detecting ionizing or radioactive radiation are fixed to the base,
- the device comprises means of sampling vapors or particle traces, for example of intoxicants or explosives, and of analyzing these vapors or traces,
- the sampling means comprise suction nozzles on the support base,
- the device comprises two vertical panels projecting over the support base, the vertical panels comprising suction nozzles for sampling vapors or particle traces.
   Exemplarily
- the height of the vertical panels is between 300 and 900 mm,
- the device further comprises means of sending/receiving an electromagnetic field with at least several frequencies within a predetermined range of frequencies for the detection of a target liquid or solid substance, means for measuring the complex impedance of the sending/receiving means influenced by the load formed by the shoe and its content, representative of the complex dielectric characteristics of the shoe and its content,
- the device further comprises means for providing an indication linked to the measured complex impedance and, consequently, to the nature of the content of said shoe of the individual to be checked,
- the sending/receiving means partially or totally surround the heel of the shoe, or surround all the sole of the shoe,
- the means for providing an indication linked to the complex impedance comprise means for comparing the measured complex impedance with predetermined reference values for the same range of frequencies and for generating an alarm when the measured complex impedance deviates from the reference values,
- the means for providing an indication linked to the complex impedance comprise means for indicating the duly detected nature of the content of the shoe or at least the family of this content,
- the means of sending/receiving an electromagnetic field are adapted to sweep the range of frequencies ranging from a few Hz to several GHz,
- the means for measuring the complex impedance are adapted to measure the latter over a plurality of sampled frequencies over the range covered by the sending/receiving means,
- the means for comparing the measured complex impedance are adapted to compare the latter with reference values contained in a memory,
- the device comprises a sensor adapted to detect the placement of the foot, covered with its shoe, of the individual to be checked,
- the device comprises manual actuation means adapted to initiate the activation of the means of sending/receiving an electromagnetic field,
- the means of sending/receiving an electromagnetic field are of inductive type,
- the means of sending/receiving an electromagnetic field are of capacitive type,
- the means of sending/receiving an electromagnetic field are formed by transmission lines,
- the sending/receiving means simultaneously implement an inductive transducer and a capacitive transducer, in particular for the detection of metallic parts in the shoe.

Other characteristics, aims and advantages of the present invention will become apparent from reading the detailed description that follows, and in light of the appended drawings, given by way of nonlimiting examples and in which:
- figure 1 represents a perspective diagrammatic view of the frame of a device according to the present invention,
- figure 2 represents a diagrammatic view in the form of functional blocks of elements making up the device illustrated in figure 1,
- figure 3 represents the real part and the imaginary part of the measured complex impedance in the case of a load made up of water, over a wide range of frequencies,
- figure 4 diagrammatically represents the positioning of a shoe relative to the sending/receiving means produced according to a first variant,
- figure 5 diagrammatically represents the positioning of a shoe relative to sending/receiving means produced according to a second variant,
- figure 6 is a bottom view of the device frame illustrated in figure 1,
- figures 7 and 8 are perspective views of a portion of the frame of the device illustrated in figure 1.

The general structure of an appliance frame according to the present invention, illustrated in the appended figures, will be described first.

This frame 10 preferably comprises:
- a support base 100,
- two symmetrical side panels 200, and
- an information module 300.

The support base 100 has the geometry of a rectangular plate in the form of a step. Its upper surface 102 is flat.

The dimensions of the support plate 100 are preferably as follows:
- width between 450 and 700 mm, typically of the order of 575 mm,
- depth between 500 and 900 mm, typically of the order of 670 mm, and
- height between 100 and 200 mm, typically of the order of 150 mm.

The two vertical side panels 200 have an overall rectangular outline. They are flat and parallel to each other. The two panels 200 project upward, above the base 100, in a position adjacent to its lateral sides 103, 104. The two side panels 200 thus form in combination with the underlying support base 100, a channel able to accommodate the foot, wearing a shoe, of a user.

The dimensions of the panels 200 are typically as follows:
- width corresponding to the depth of the support base 100,
- height between 300 and 900 mm, typically of the order of 690 mm.

The step-shaped structure proposed for the support base 100, typically of a height of the order of 150 mm, described previously, is designed so that the person being examined does not have to climb onto a plinth, with the risk of falling and of physical difficulty resulting from the exposure to other people in the surrounding area. In practice, the use of a support base 100 designed to accommodate a single foot requires only an act of the type of the initial act of stepping onto a ladder and placing the foot in a clearly indicated area.

Compared to the prior art, such a step structure offers the following advantages:
- preparing to climb a step is a normal everyday act that requires no particular instruction for it to be executed correctly,
- the same operation requires no physical effort, even on the part of an elderly person or a pregnant woman and, in particular, does not require a major physical effort, like that required, for example, to climb onto a platform,
- the step-shaped structure distances from the ground the antennas for generating and receiving electromagnetic fields formed by windings incorporated in the side panels 200, thus reducing the risks of coupling with any metal structures incorporated in this floor,
- such a structure makes it possible to provide for a natural examination of one shoe at a time, and
- allows for a compact structure compared to a platform onto which a person has to climb, according to certain devices known from the prior art.

The information module 300 preferably comprises a control console equipped with an input and/or programming keyboard, a display and means (visual and/or audible) of indicating network presence and alarms. In this respect, the invention is of course not limited to the particular embodiments represented in the appended figures.

The information module 300 further preferably comprises means for providing visual and/or audible messages guiding the user throughout the detection process. Preferably, this module 300 successively supplies messages, the functions of which are:
- to signal that the device is ready for the detection, for example, the "READY" message,
- to prompt the individual to place his foot, his shoe, on the imprint defined for this purpose, which will be described later in detail, for example in the form of the "PLACE SHOE" message,
- to indicate to the individual that the detection has been completed successfully without detecting alarms and to prompt him, either to repeat with the second shoe, or to withdraw, for example in the form of "PASSED" or "REMOVE" messages.

Obviously, the means 300 preferably also comprise processing means for using the electrical signals obtained from the detection means that will be described below.

There now follows a description of the preferred geometry of the positioning marking-forming means according to the present invention provided on the upper surface 102 of the support base 100.

These positioning marking means bear the general reference 400.

They preferably comprise a drawing 410 combined with an end-stop 450.

The drawing 410 itself preferably comprises three elements in combination: a center line 420, a frame 430 and an imprint 440.

The center line 420 extends in parallel to the side panels 200, mid-way between them. It is centered on the frame 430 and preferably of a length less than or equal to the latter.

The frame 430 is preferably a rectangular frame comprising two long sides parallel to each other and parallel to the center line 420, and parallel to the side panels 200, and two short sides parallel to each other, perpendicular to the long sides, and linking the latter.

The dimensions of the frame 430 are preferably as follows:
- width (or length of the short sides 436, 438) between 110 and 250 mm, typically of the order of 180 mm,
- length (or length of the long sides 432, 434) preferably between 300 and 500 mm, typically of the order of 400 mm.

The general dimensions of the imprint 440 are preferably as follows:
- length or maximum footprint parallel to the center line 420 between 250 and 350 mm, typically of the order of 300 mm, and
- footprint widthwise, or perpendicular to the center line 420, between 100 and 180 mm, typically of the order of 136 mm.

The end-stop 450 can be formed by any appropriate embodiment. It is preferably a slightly concave projection provided in the area common to the short sides of the frame and to the rear part of the imprint 440, to serve as a rest for the heel of the shoe.

The positioning imprint 400 can be drawn or etched on the upper plane 102 of the step 100. The end-stop 450 forms a reference chock, in relief, which makes it possible to impose the position of the heel of the shoe and thus makes it possible to accurately and repetitively position the shoe relative to means of detecting ionizing or radioactive radiation of the device described below. The Applicant has, in fact, determined that such an accurate, repetitive positioning is essential for a reliable analysis.

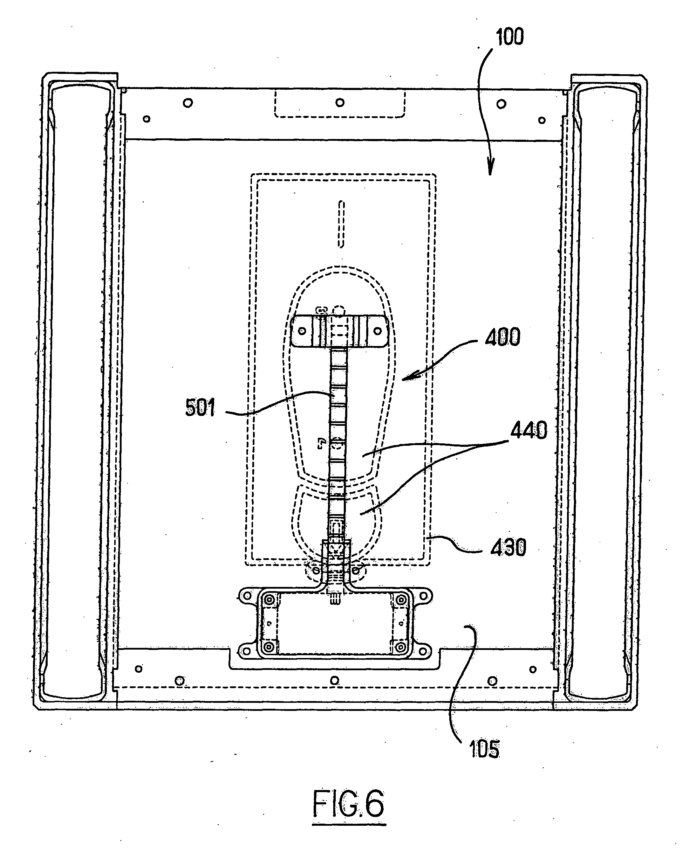

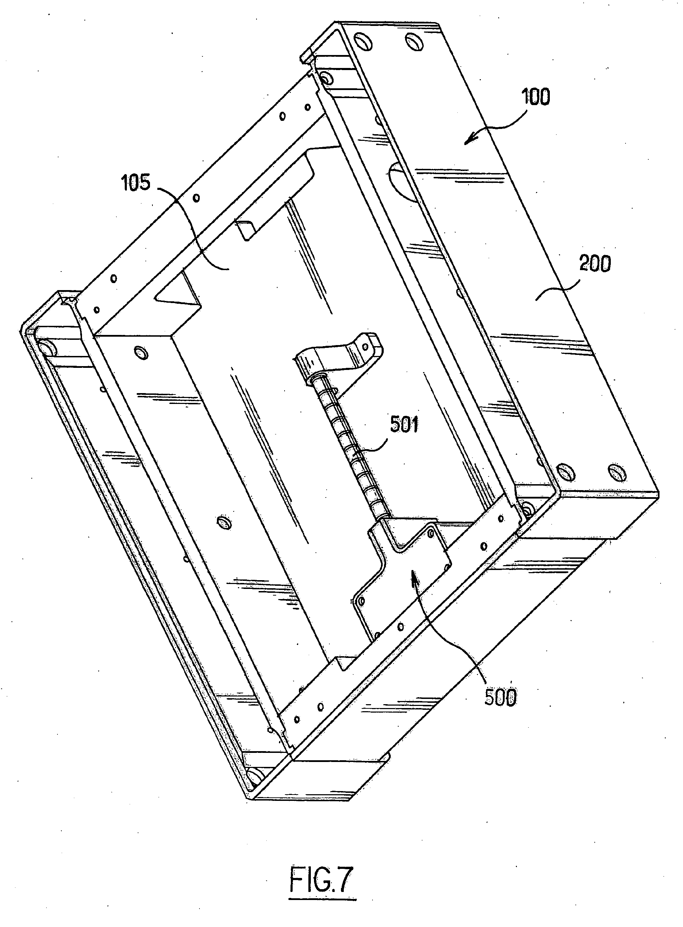

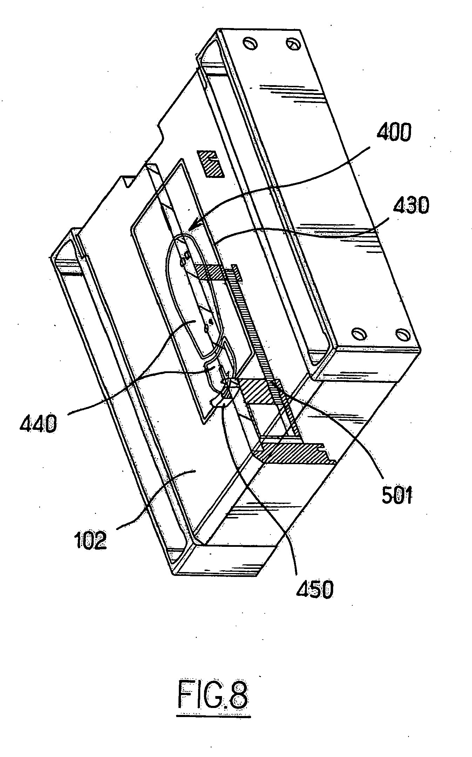

There now follows a more detailed description of the means of detecting ionizing or radioactive radiation of the device with reference to figures 6 to 8.

As illustrated in figures 6 to 8, the means of detecting ionizing or radioactive radiation 500 are positioned under the support base 100. This makes it possible to increase the compactness of the device and to protect the means of detecting ionizing or radioactive radiation 500 from impacts.

The means of detecting ionizing or radioactive radiation can be the subject of numerous embodiments. They can be formed by any structures known to those skilled in the art, in particular any structures suitable for converting a detected ionizing ray into an electrical signal that can be used.

It may be, for example and in a nonlimiting way, a Geiger-type detector.

In the embodiment illustrated in figures 6 to 8, the means of detecting ionizing or radioactive radiation 500 comprise a tube 501 containing a gas, the composition of which is chosen to generate an ionizing discharge on detection of an active radiation, and from that, an electrical pulse.

Advantageously, the means of detecting ionizing or radioactive radiation can also be made up of a scintillator-based detector suitable for converting the detected energy into light scintillations which are then converted into electrical signals by a network of photomultipliers. Numerous scintillators have been proposed for this purpose, for example based on sodium iodide, cesium iodide or even bismuth germanate.

The means of detecting ionizing or radioactive radiation 500 are placed in any appropriate position, and preferably fixed under the base 100, on the side 105 opposite that comprising the positioning marking means 400. This makes it possible to increase the chances of detecting a radioactive product contained in the shoe or the sock of the individual being checked, because of the proximity between the shoe being checked and the means of detecting ionizing or radioactive radiation 500.

Advantageously, the tube 501 is placed directly under the imprint 440, in a plane of symmetry of the imprint 440.

Moreover, in the embodiment illustrated in figures 6 to 8, the tube 501 extends roughly over the entire length of the imprint 440. This makes it possible to ensure an optimal detection in the entire region covered by the sole of the shoe.

The means of detecting ionizing or radioactive radiation 500 comprise means 502 of detecting the electrical pulse generated by the tube 501.

Advantageously, these means 502 of detecting the electrical pulse are positioned under the base 100, in a peripheral region of the drawing 410, and are fixed to the base 100.

The means of detecting ionizing or radioactive radiation 500 can be used to provide an indication linked to the presence or the absence of a product emitting an ionizing or radioactive radiation in an area of the individual between the sole of the shoe and the knee of the individual to be checked.

The means of detecting ionizing or radioactive radiation 500 are adapted to work in masked time, in parallel with complex impedance measurement means described below.

The complex impedance measurement means rely mainly on the following approach.

The dielectric materials present four basic polarizations: electronic, ionic, dipole and migrational.

Each polarization type is characterized by a setting-up time, called rise time. If the excitation electromagnetic field has a pulsation greater than the inverse of the rise time, the polarization cannot be produced. Consequently, the polarization is present only at the frequencies below the cut-off frequencies and is absent at the higher frequencies. In the transition area, an energy loss phenomenon is observed in the dielectric due to the rotation of the molecules that are out of phase with the excitation field.

The rise times for electronic polarization are 10⁻¹⁴ to 10⁻¹⁵ s, that is, in the optical domain. Such a range of frequencies is difficult to use on an industrial scale because the foot covered with its shoe of an individual to be checked can often be partially or completely opaque.

Ionic polarization has rise times between 10⁻¹³ to 10⁻¹⁴ s, very close to the electronic relaxation times. It is therefore also difficult to use.

Dipole polarization is characteristic of the polar dielectrics (such as water, for example).

Dipole polarization, unlike electronic and ionic polarizations, which are without inertia, persist for a certain time after an excitation has been extinguished. The dipole polarization diminishes with an exponential law and a time constant, called relaxation time, between 10⁻⁶ and 10⁻¹¹ s, that is, in the radiofrequency field. The electromagnetic waves having these frequencies can pass through glass, plastic material and other dielectric materials. The Applicant has thus determined that the electromagnetic waves can be used to examine the foot, covered with its shoe, of an individual to be checked.

Migrational polarization is present in certain dielectrics, in particular in the heterogeneous materials, which contain impurities. In this case, the charges move very slowly and the rise time can be several seconds, minutes, even sometimes hours. This type of polarization is consequently measurable only at very low frequency.

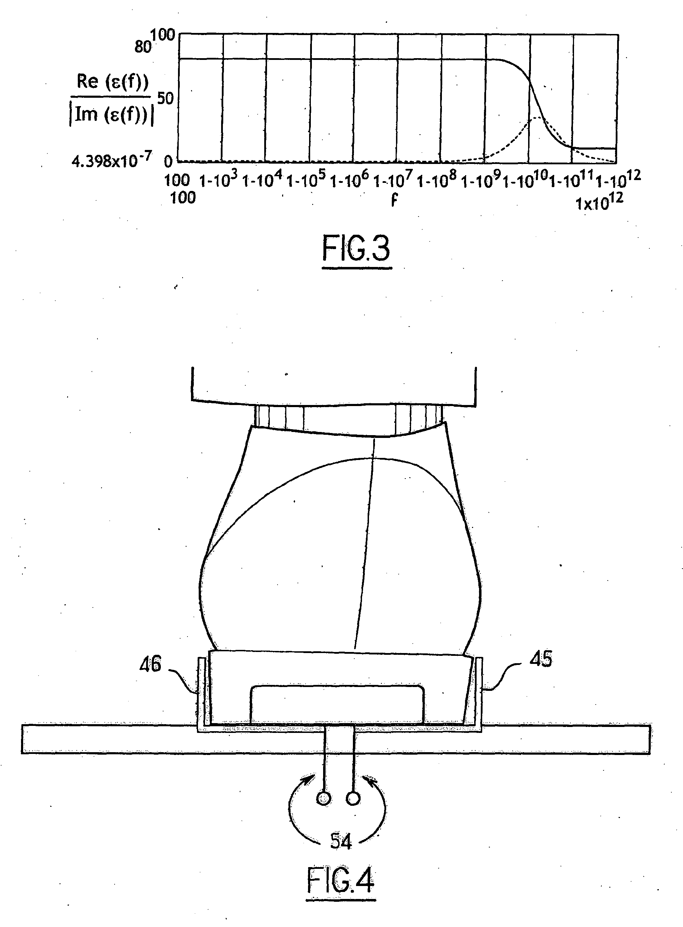

Water which is a polar liquid, and consequently water-based liquids, present a relaxation time of the order of 10⁻¹¹ s at ambient temperature, corresponding to a frequency of approximately 16 GHz. Measuring the complex dielectric constant at a frequency lower than the relaxation frequency shows a high real part and limited losses (distilled water) as illustrated in the appended figure 3.

Saturated hydrocarbons CnH(2n+2) are non-polar molecules with a very low electrical dipole moment, so they do not exhibit a dipole polarization effect and the value of the real part of the dielectric constant is low (relative dielectric constant of the order of 2). The losses in the hydrocarbons are negligible up to very high frequencies. If a hydrocarbon molecule loses its symmetry such as, for example, in the case of ethyl or methyl alcohol, the appearance of an electrical dipole moment and, consequently, a constant greater than that obtained in the case of hydrocarbons, and a resonance effect at the dipolar relaxation frequency, are witnessed.

The physical effects described above have been known since the end of the 1930s (see, for example, Peter Debye, Nobel Lecture, 1936).

However, they have not hitherto been applied for effectively analyzing the foot, covered with its shoe, of an individual to be checked.

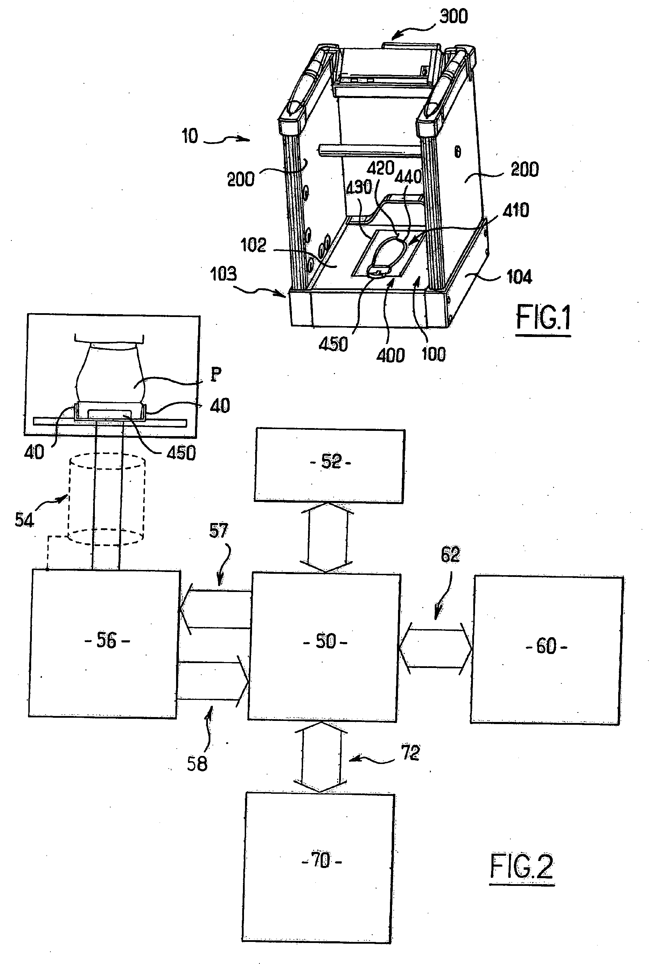

With reference to figure 2, there is diagrammatically represented, under the reference P, a foot, covered with its shoe, of an individual to be checked, and in which there is the end-stop 450. Preferably, the electromagnetic sensor or sensors intended to measure the complex dielectric characteristics of the sole and the heel of the shoe and its content are placed level with the heel of the shoe, either side of the longitudinal axis of the foot.

More specifically, a part of these means 40 of sending/receiving an electromagnetic field extend vertically towards the outside of the base 100 in planes parallel to the side panels 200, level with the rear part of the imprint 440.

Preferably, the part of the sending/receiving means 40 that extend vertically towards the outside have a height less than the height of a standard shoe sole. This makes it possible to prevent the sending/receiving means 40 from being influenced by the charge made up of the blood in the foot of the individual to be checked (blood being a polar liquid).

These means of sending/receiving electromagnetic fields are preferably formed by one or more transducers (antennas) 40 linked, via a connecting network 54, a measuring electromagnetic network 56 and buses 57, 58, to a generator 50, designed to emit an electromagnetic wave. Typically, the generator 50 is adapted to cover the range of frequencies from a few Hz, for example 5 Hz, to a few GHz, for example 20 or 50 GHz. The generator 50 is operated, either manually by an operator when an individual to be checked places his foot covered with its shoe on the imprint 440, or automatically under the effect of a sensor 52 designed to detect the presence of a foot, covered with its shoe, of the individual to be checked.

The means 40 of sending/receiving electromagnetic fields can be the subject of numerous embodiments.

In one embodiment, these means 40 are formed by a simple winding forming a transmitter and receiver, linked by a two-wire network 54 to the means 56.

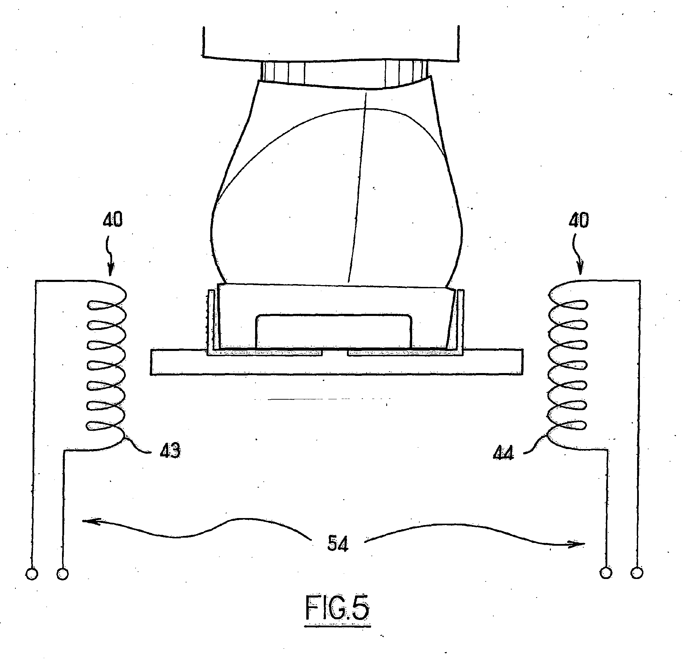

In another embodiment illustrated in figure 5, the means 40 are formed by two windings 43, 44, respectively, and where appropriate, alternatively, forming transmitter and receiver, linked by a four-wire network 54 to the means 56.

In another embodiment illustrated in figure 4, the means 40 are formed by two plates 45, 46 of a capacitor located either side of the heel of the imprint and linked by a two-wire network 54 to the means 56.

In another embodiment of the present invention, the means 40 are formed by transmission lines. Typically, these transmission lines operate in the microwave field. They can be formed by two-wire lines or slotted waveguides.

Moreover, within the framework of the present invention, it is possible to use sensors simultaneously implementing an inductive transducer and a capacitive transducer. This arrangement makes it possible to detect that the increase in the real part of the complex dielectric constant is due to a metal plate inside the shoe and not to one of the liquid or solid substances having particular properties. This arrangement makes it possible to detect the presence of metal screens likely to form shielding disturbing the measurement. The inductive sensor powered by an alternating current source will produce, in this case, eddy currents in the metal part. These currents will be measured by the processing device. Comparing the signals originating from electrical field transducer and from the magnetic field transducer provides for a satisfactory detection.

Of course, the number of means that make up the transmitters and/or receivers is by no means limited and can be greater than those illustrated in the appended figures.

Those skilled in the art will understand on reading the foregoing detailed description that the present invention thus proposes an electromagnetic sensor with high frequency sweep which makes it possible to measure the dielectric characteristics of the shoe and its content.

The means 50 are moreover designed to measure the complex impedance of the sending means 40 influenced by the charge made up of the shoe and its content, representative of the complex dielectric characteristics of the shoe and its content. More specifically, the means 50 are designed to measure this complex impedance at frequencies sampled over the abovementioned excitation range from a few Hz to several GHz. Typically, the means 50 thus operate over a number of frequencies between 10 and 50, advantageously over 30 or so frequencies.

Moreover, the means 50 are adapted to provide an indication linked to the measured complex impedance and to the nature of the content of the shoe detected accordingly.

Preferably, these means 50 are adapted to compare the duly measured complex impedance with predetermined reference values for the same range of frequencies and to generate an alarm when the measured complex impedance deviates from the reference values.

Figure 2 shows a memory 60 coupled to the analysis means 50 by a communication bus 62, and in which can be stored the predetermined reference values over the working frequency range. Also represented in the same figure 2, under the reference 70, are alarm means, preferably present on the control console of the information module 300, linked to the means 50 by a communication bus 72 and adapted to generate an audible and/or visual alarm, when the measured complex impedance deviates from the reference values.

As a variant, the reference values can be calculated by the means 50 and not contained in a memory 60.

Moreover, according to another variant, the means 70 can be adapted to directly indicate the nature of the content of the shoe or at least the family of this content instead of or in addition to the abovementioned alarm means.

Once the foot covered with its shoe to be checked is positioned, the generator 50 is activated, either manually or automatically, and the complex impedance of the network formed by the sending/receiving circuit 40 influenced by the shoe and its content is measured.

The measured impedance, which depends on the transmission/reception circuit and the charge, is made up of a real part, linked to the losses (conductibility) in the content of the shoe being analyzed, and an imaginary part, linked to the dielectric characteristics.

The impedance is measured at different frequencies in the predetermined range.

It will, moreover, be noted that, in the framework of the present invention, the sensors 40 are preferably adapted to cover at least a substantial part of the shoe, even all of the latter. This ensures a high level of security in the analysis.

When a single transducer is provided, the latter is simultaneously or successively both transmitter and receiver.

When several transducers are provided, all combinations are possible, in other words, these transducers can be simultaneously or successively transmitter and/or receiver.

Nor is it limited to a particular application and can be applied to any sensitive area such as a school, station, private or public company, stadium, auditorium, event venue, etc.

The end-stop 450 for the heel can be omitted. In this case, however, it is then preferable to provide several windings, longitudinally offset, that is, parallel to the center line 420, to optimize the detection and to retain the weakest signal obtained from the sending/receiving means in order to minimize the effects of external interferences.

As stated previously, preferably, the device according to the present invention comprises random sorting means for randomly choosing individuals directed to one or more additional tests. The additional test or tests can, for example, consist of a manual frisking or an automatic analysis device, for example sampling and analysis of vapor or particle traces, for example of intoxicants or explosives.

As indicated previously, the device according to the present invention can be complemented by suction means for vapor and/or traces of sensitive material, for example intoxicants, even explosives, possibly originating from the shoes. Such suction means are preferably incorporated in the side panels 200 and in the step-forming support base 100. The suction means can comprise a plurality of suction nozzles located on the side panels 200.

These suction nozzles can be followed by filters and inspection means. The latter can themselves be linked to the input of a pump activated by a motor. The output of the pump can be linked to an appropriate detector, for example of the mass spectrometer type. The detector and the motor can be linked and controlled by a processing unit.

The suction nozzles can be directly replaced by dedicated monolithic sensors, electrically connected to the processing unit.

According to a variant, the device comprises metal detection means. For example, the vertical side panels 200 preferably house windings made of electrically conductive wires designed to detect metals according to a method that is known per se. The height of the panels 200 and of the windings housed in the latter is adapted to allow for a reliable detection of metal objects carried by an individual at the level of his shoe, but also at the level of the lower leg, that is, calf to knee.

The combination of the means of detecting ionizing or radioactive radiation 500 with the means for detecting metals makes it possible to prevent attempts to smuggle radioactive materials hidden inside lead boxes or in any other concealing metal.

The means of detecting ionizing or radioactive radiation 500 can, advantageously, perform an additional analysis to determine the emitted spectrum and, consequently, the radioactive materials and contaminants carried in the shoe. This information can be useful in the event of a detection, to establish the best form of response.

Compared to the prior art, the present invention in particular offers the following advantages:
- high and uniform inspection security,
- a high degree of fluidity of movement without requiring specialist inspection personnel,
- the elimination of the costs of specialist personnel dedicated in some known applications to manually inspecting shoes,
- increased convenience for the public through the elimination of the difficulty caused by removing the shoes and putting them back on again and through the loss of the time associated with such an operation,
- elimination of the need for x-ray appliances required in certain known applications for an examination,
- the device is lightweight and small in volume, so easy to move and can be adapted to any site,
- the shoes are not analyzed in differential mode, as is the case in certain known appliances, but in an absolute manner, one shoe at a time. Thus, each shoe is assessed separately and the detection of the most critical target liquid or solid substance, that is, the one with the minimum signal, is performed independently of the comparison with the other. The Applicant has determined that this arrangement makes it possible to ensure security of interception of the minimum signal targets in all transport conditions.
- in ergonomic terms, the appliance is simple and convenient. It does not require the person being examined to behave strangely or adopt embarrassing positions. The analysis time can be reduced to a minimum.
- the use of a step-shaped support base (associated with positioning marking means) ensures the detection on a single shoe, the second shoe resting on the floor being kept outside the field of detection.

## Claims

1. A device for detecting unauthorized product In a protected access area, which comprises, in combination:
- a support base (100) designed to receive a single foot, covered with its shoe, of an individual to be checked, said support base comprising two vertical side panels,
- positioning marking means (400), on the support base (100), for imposing an exact positioning of the foot covered with Its shoe, the positioning marking means (400) comprising an imprint (440),
- means of detecting metals, said means of detecting metals including windings made of electrically conductive wires housed in the vertical side panels of the support base, **characterized in that** the device further comprises
- means of detecting ionizing or radioactive radiation (500), to provide an indication linked to the presence or the absence of a product emitting an ionizing or radioactive radiation in an area of the individual between the sole of the shoe and the knee of the individual to be checked, said means of detecting ionizing or radioactive radiation:
o being adapted to perform an analysis to determine the emitted spectrum and consequently the radioactive material and contaminants carried in the shoe, and
o comprising a tube containing a gas, the composition of which is chosen to generate an ionizing discharge on detection of an active radiation, the ionizing discharge making it possible to generate an electrical pulse, the tube being positioned in a plane of symmetry of the imprint (440) under the support base (100) on the side opposite (105) to that comprising the positioning marking means (400), said tube extending roughly over the entire length of the Imprint
the combination of means of detecting ionizing or radioactive radiation with means of detecting metals allowing to present attempts to smuggle radioactive materials.

2. The device as claimed in claim 1, wherein the means of detecting ionizing or radioactive radiation (500) comprise means (502) of detecting the electrical pulse generated by the tube (501).

3. The device as claimed in claim 2, wherein the means (502) of detecting the electrical pulse are positioned under the base (100), In a peripheral region of the imprint.

4. The device as claimed In claim 1, wherein the means of detecting ionizing or radioactive radiation (500) are fixed to the base.

5. The device as claimed in claim 1, which comprises a means (300) which delivers visual or audible messages guiding the user during the successive detection steps.

6. The device as claimed in claim 1, which comprises random sorting means (740) for randomly choosing individuals directed towards one or more additional tests.

7. The device as claimed in claim 1, which comprises means (800) of sampling vapors or particle traces, for example of intoxicants or explosives, and of analyzing these vapors or traces.

8. The device as claimed in claim 7, wherein the sampling means comprise suction nozzles (800) on the support base (100).

9. The device as claimed in claim 1, wherein said vertical panels (200) are projecting over the support base (100), the vertical panels (200) comprising suction nozzles (800) for sampling vapors or particle traces.

## Patentansprüche

1. Vorrichtung zur Erkennung nicht autorisierter Produkte in einem Bereich mit eingeschränktem Zugang, die in Kombination Folgendes aufweist:
- eine Trägerbasis (100) zur Aufnahme eines einzelnen, von seinem Schuh bedeckten Fußes einer zu kontrollierenden Person, wobei die genannte Trägerbasis zwei vertikale Seitenplatten aufweist,
- Positionierungsmarkierungsmittel (400) auf der Trägerbasis (100) zum Aufzwingen einer genauen Positionierung des mit seinem Schuh bedeckten Fußes, wobei die Positionierungsmarkierungsmittel (400) einen Abdruck (440) aufweisen,
- eine Metalldetektoreinrichtung, wobei die genannte Metalldetektoreinrichtung Wicklungen aufweist, die aus in den vertikalen Seitenplatten der Trägerbasis eingehäusten elektrisch leitfähigen Drähten hergestellt sind,
**dadurch gekennzeichnet, dass** die Vorrichtung ferner Folgendes aufweist:
- Mittel zur Erkennung ionisierender oder radioaktiver Strahlung (500) zum Bereitstellen einer Anzeige, die mit der Anwesenheit oder der Abwesenheit eines Produkts, das eine ionisierende oder radioaktive Strahlung ausstrahlt, in einem Bereich der Person zwischen der Schuhsohle und dem Knie der zu kontrollierenden Person verbunden ist, wobei die genannten Mittel zur Erkennung von ionisierender oder radioaktiver Strahlung:
o für die Durchführung einer Analyse zur Ermittlung des ausgestrahlten Spektrums und folglich des/der im Schuh mitgeführten radioaktiven Materials und Kontaminationsstoffe ausgelegt sind, und
o eine Röhre aufweisen, die ein Gas enthält, dessen Zusammensetzung so gewählt ist, dass sie bei Erkennung einer aktiven Strahlung eine ionisierende Entladung erzeugt, wobei die ionisierende Entladung die Erzeugung eines elektrischen Impulses ermöglicht, wobei die Röhre in einer Symmetrieebene des Abdrucks (440) unter der Trägerbasis (100) auf der Seite positioniert ist, die der die Positionierungsmarkierungsmittel (400) aufweisenden entgegengesetzt ist (105), wobei die genannte Röhre sich ungefähr über die gesamte Länge des Abdrucks erstreckt,
wobei die Kombination von Mitteln zur Erkennung ionisierender oder radioaktiver Strahlung mit einer Metalldetektoreinrichtung es zulässt, Versuche, radioaktive Materialien zu schmuggeln, zu verhüten.

2. Vorrichtung nach Anspruch 1, wobei die Mittel zur Erkennung ionisierender oder radioaktiver Strahlung (500) Mittel (502) zur Erkennung des von der Röhre (501) erzeugten elektrischen Impulses aufweisen.

3. Vorrichtung nach Anspruch 2, wobei die Mittel (502) zur Erkennung des elektrischen Impulses unter der Basis (100) in einer Randregion des Abdrucks angeordnet sind.

4. Vorrichtung nach Anspruch 1, wobei die Mittel zur Erkennung ionisierender oder radioaktiver Strahlung (500) an der Basis befestigt sind.

5. Vorrichtung nach Anspruch 1, die ein Mittel (300) aufweist, das optische oder akustische Nachrichten abgibt, die den Benutzer während der aufeinanderfolgenden Erkennungsschritte anleiten.

6. Vorrichtung nach Anspruch 1, die Zufallssortiermittel (740) zum zufälligen Wählen von Personen, die zu einer oder mehreren zusätzlichen Prüfungen geleitet werden, aufweist.

7. Vorrichtung nach Anspruch 1, die Mittel (800) zur Beprobung von Dämpfen oder Teilchenspuren, z.B. von Rauschmitteln oder Sprengstoffen, und zum Analysieren dieser Dämpfe oder Spuren aufweist.

8. Vorrichtung nach Anspruch 7, wobei die Beprobungsmittel Saugdüsen (800) an der Trägerbasis (100) aufweisen.

9. Vorrichtung nach Anspruch 1, wobei die genannten zwei vertikalen Platten (200) über die Trägerbasis (100) überstehen, wobei die vertikalen Platten (200) Saugdüsen (800) zur Beprobung von Dämpfen oder Teilchenspuren aufweisen.

## Revendications

1. Dispositif détecteur de produit non autorisé dans une zone à accès protégé, qui comprend, en combinaison :
- une embase support (100) conçue pour recevoir un pied unique, revêtu de sa chaussure, d'un individu à contrôler, ladite embase support comprenant deux panneaux latéraux verticaux,
- des moyens repères de positionnement (400), sur l'embase support (100), pour imposer un positionnement précis du pied revêtu de sa chaussure, les moyens repères de positionnement (400) comprenant une empreinte (440),
- des moyens détecteurs de métaux, lesdits moyens détecteurs de métaux comprenant des enroulements faits de fils électro-conducteurs logés dans les panneaux latéraux verticaux de l'embase support, **caractérisé en ce que** le dispositif comprend en outré :
- des moyens détecteurs de rayonnement ionisant ou radioactif (500), pour fournir une information liée à la présence ou l'absence d'un produit émettant un rayonnement ionisant ou radioactif dans une zone de l'individu entre la plante de la chaussure et le genoux de l'individu à contrôler, lesdits moyens détecteurs de rayonnement ionisant ou radioactif :
- étant adaptés pour réaliser une analyse pour déterminer le spectre et par conséquent le matériau radioactif et les contaminants transportés dans la chaussure, et
- comprenant un tube contenant un gaz, dont la composition est choisie pour générer une décharge ionisante lors de la détection d'un rayonnement actif, la décharge ionisante permettant la génération d'une impulsion électrique, le tube étant positionné dans un plan de symétrie de l'empreinte (440) sous l'embase support (100) sur le côté opposé (105) à celui comprenant les moyens repères de positionnement (400), ledit tube s'étendant approximativement sur la longueur entière de l'empreinte,
la combinaison de moyens détecteurs de rayonnement ionisant ou radioactif avec des moyens détecteurs de métaux permettant d'empêcher des tentatives de contrebande de matériaux radioactifs.

2. Dispositif selon la revendication 1, dans lequel les moyens détecteurs de rayonnement ionisant ou radioactif (500) comprennent des moyens (502) de détection de l'impulsion électrique générée par le tube (501).

3. Dispositif selon la revendication 2, dans lequel les moyens (502) de détection de l'impulsion électrique sont positionnés sous l'embase (100), dans une région périphérique de l'empreinte.

4. Dispositif selon la revendication 1, dans lequel les moyens détecteurs de rayonnement ionisant ou radioactif (500) sont fixés à l'embase.

5. Dispositif selon la revendication 1, qui comprend un moyen (300) qui délivre des messages visuels ou sonores guidant l'utilisateur au cours d'étapes successives de détection.

6. Dispositif selon la revendication 1, qui comprend des moyens de tri aléatoire (740) pour choisir aléatoirement des individus dirigés vers un ou plusieurs tests supplémentaires.

7. Dispositif selon la revendication 1, qui comprend des moyens (800) de prélèvement de vapeurs ou de traces de particules, par exemple de stupéfiants ou d'explosifs, et d'analyse de ces vapeurs ou traces.

8. Dispositif selon la revendication 7, dans lequel les moyens de prélèvement comprennent des buses d'aspiration (800) sur l'embase support (100).

9. Dispositif selon la revendication 1, qui comprend deux panneaux verticaux (200) en saillie sur l'embase support (100), les panneaux verticaux (200) comprenant des buses d'aspiration (800) pour le prélèvement de vapeurs ou de traces de particules.
